# EUROPEAN PATENT SPECIFICATION

(11) **EP 3 100 474 B1**
(45) Date of publication and mention of the grant of the patent: **05.06.2019**
(21) Application number: 14880862.9
(22) Date of filing: 29.01.2014
(51) Int. Cl.: H04W 4/02, H04W 88/08, H04W 88/02, H04W 4/06, H04W 24/10, H04W 68/10, H04W 76/38, H04W 76/27, H04W 76/34, H04W 4/90, H04W 4/029

(54) **UE STATISTICS COLLECTION IN AN EMERGENCY AREA**
BENUTZERGERÄTSTATISTIKENSAMMLUNG IN EINEM NOTFALLBEREICH
COLLECTE DE STATISTIQUES D'ÉQUIPEMENT UTILISATEUR (UE) DANS UNE ZONE D'URGENCE

(43) Date of publication of application: 07.12.2016
(73) Proprietor: Telefonaktiebolaget LM Ericsson (publ), 164 83 Stockholm (SE)
(72) Inventor: GUO, Feng, Shanghai 201824 (CN); DONG, Mei, Shanghai 200335 (CN); LIU, Di, Shanghai 201615 (CN); ZHANG, Nan, S-41753 Göteborg (SE)
(74) Representative: Zacco Sweden AB
(86) International application number: PCT/CN2014/000136
(87) International publication number: WO 2015/113185

(56) References cited:
- EP-A1- 2 512 171
- CN-A- 101 502 135
- CN-A- 103 310 578
- US-A1- 2005 055 417
- US-A1- 2013 294 320
- "LTE; Evolved Universal Terrestrial Radio Access Network (E-UTRAN); General aspects and principles for interfaces supporting Multimedia Broadcast Multicast Service (MBMS) within E-UTRAN (3GPP TS 36.440 version 11.2.0 Release 11)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 3, no. V11.2.0, 1 April 2013 (2013-04-01), XP014156784,

## Description

### TECHNICAL FIELD

The present disclosure relates to UE statistics collection in an emergency area of a wireless communication network.

### BACKGROUND

Many emergency warning technologies have been developed in the past years. In case that an emergency, such as an earthquake, tsunami or fire disaster, is to happen or has happened, a warning message is expected to be broadcasted to people in the emergency area as soon as possible to reduce disaster damage. As the most popular and instant communication approach, the cell phone is considered the best way to notify the user of the warning information. In 3^{rd} Generation Partnership Project (3GPP) TS 36.413, the Emergency Area ID IE is used to indicate the area which has the emergency impact.

The warning message is important in damage reduction. However, in case that the emergency such as the disaster has happened and the damage has been done, it is also desired to have information of the people located in the emergency area for the purpose of rescue. For example, the number of people located in a building on fire is important for the firemen to take appropriate actions.

The information of the people can be derived from statistics of User Equipments (UEs) located in the emergency area. Unfortunately, the existing wireless communication networks do not have a mechanism to obtain the UE statistics accurately and efficiently. For example, a Mobility Management Entity (MME) may be aware of the number of UEs in the emergency area which are in the connected state, but not aware of the exact number of UEs which are in the idle state. A location reporting procedure is defined in 3GPP 36.413, which allows the MME to request an eNodeB to report where a specific UE is currently located. However, the location reporting procedure can only obtain the location of one specific UE each time US 2013/294320 discloses a method for delivering MBMS service by unicast and/or by broadcast/multicast. "LTE; Evolved Universal Terrestrial Radio Access Network (E-UTRAN); General aspects and principles for interfaces supporting Multimedia Broadcast Multicast Service (MBMS) within E-UTRAN (3GPP TS 36.440 version 11.2.0 Release 11)", discloses general aspects and principles for interfaces supporting MBMS within E-UTRAN. EP 2 512 171 discloses a method for managing energy mode of a micro base station in a mobile communication network.

### SUMMARY

Therefore, it is an object of the present disclosure to solve at least one of the above-mentioned problems.

According to an aspect of the present disclosure, a method for a first core network node in a wireless communication network collecting UE statistics of UEs located in an emergency area is provided as defined by claim 1. A corresponding first core network node is provided as defined by claim 10.

The method comprises in response to receiving from a second core network node or an application functionality a command requesting UE statistics of idle UEs and connected UEs located in at least one base station covering at least a part of the emergency area, transmitting at least one UE statistics request message to the at least one base station to trigger the base station to obtain UE statistics of idle UEs for the base station. The first core network node receives from the at least one base station, at least one UE statistics response message that includes the idle UE statistics, obtains UE statistics of connected UEs located in the at least one base station, and transmitting to, at least one of the second core network node or the application functionality, a report message including the UE statistics of the idle UEs and connected UEs located in the at least one base station.

The statistics may include the number of UEs. The statistics may include UE location information and additionally include UE type information. The command may include network element location information on the emergency area which indicates the at least one base station. The first core network node may include a MME and a Serving GPRS Support Node (SGSN). The second core network node may include a Policy and Charging Rules Functionality (PCRF) and a Gateway Mobile Location Centre (GMLC).

The at least one UE statistics request message may include specific Radio Resource Control (RRC) paging messages to be broadcasted by the at least one base station, wherein each of the specific RRC paging messages is addressed to one specific idle UE to trigger the specific idle UE to establish RRC connections with the base station. The at least one UE statistics request message may include a general RRC paging message to be broadcasted by the at least one base station, wherein the general RRC paging message is not addressed to any specific idle UE but to all idle UEs to trigger the idle UEs to establish RRC connections with the corresponding base station base station. The specific RRC paging message or general RRC paging message may comprise an indicator to indicate the idle UEs to release the RRC connections within a time period after establishment of the RRC connections respectively.

According to another aspect of the present disclosure, a method for a base station covering at least part of an emergency area in a wireless communication network collecting UE statistics of UEs located in the emergency area is provided as defined by claim 6. A corresponding base station is defined by claim 16.

The method comprises receiving from a core network node at least one UE statistics request message. The base station broadcasts the at least one UE statistics request message to idle UEs located in the base station to trigger the idle UEs to establish RRC connections with the base station, obtains the UE statistics of the idle UEs located in the base station from the RRC connections, and transmits to the core network node a UE statistics response message that includes the idle UE statistics.

The at least one UE statistics request message may include specific RRC paging messages each of which is addressed to one specific idle UE to trigger the specific idle UE to establish RRC connections with the base station, and the broadcasting may comprise broadcasting the specific RRC paging messages. The at least one UE statistics request message may include a general RRC paging message which is not addressed to any specific idle UE but to all idle UEs to trigger the idle UEs to establish RRC connections with the base station, and the broadcasting may comprise broadcasting the general RRC paging message. The specific RRC paging message or general RRC paging message may comprise an indicator to indicate the idle UEs to release the RRC connections within a time period after establishment of the RRC connections respectively.

The first core network node in the wireless communication network is operable to collect UE statistics of UEs located in the emergency area. The first core network node comprises a first interface adapted to communicate with a second core network node or an application functionality, and a second interface adapted to communicate with at least one base station covering at least a part of the emergency area. The first core network node further comprises a controlling unit adapted to in response to receiving from the second core network node or the application functionality via the first interface a command requesting UE statistics of idle UEs and connected UEs located in the at least one base stations, transmit to, the at least one base station via the second interface, at least one UE statistics request message to trigger the base station to obtain UE statistics of idle UEs for the base station, receive from, the at least one base station via the second interface, at least one UE statistics response message that includes the idle UE statistics, obtain UE statistics of connected UEs located in the at least one base station, and transmit to, at least one of the second core network node or the application functionality via the first interface, a report message including the UE statistics of the idle UEs and connected UEs located in the at least one base station.

The base station covering at least part of an emergency area, in a wireless communication network is operable to collect UE statisticsof UEs located in the emergency area. The base station comprises a first interface adapted to communicate with a core network node, and a second interface adapted to communicate with UEs located in the base station. The base station further comprises a controlling unit adapted to receive from, the core network node via the first interface, at least one UE statistics request message, broadcast via the second interface the at least one UE statistics request message to idle UEs located in the base station to trigger the idle UEs to establish RRC connections with the base station, obtain the UE statistics of the idle UEs located in the base station from the RRC connections, and transmit to, the core network node via the first interface, a UE statistics response message that includes the idle UE statistics.

The at least one UE statistics request message may include specific RRC paging messages each of which is addressed to one specific idle UE to trigger the specific idle UE to establish RRC connections with the base station, and the controlling unit may be further adapted to broadcast the specific RRC paging messages. The at least one UE statistics request message may include a general RRC paging message which is not addressed to any specific idle UE but to all idle UEs to trigger the idle UEs to establish RRC connections with the base station, and the controlling unit may be further adapted to broadcast the general RRC paging message. The specific RRC paging message or general RRC paging message may comprise an indicator to indicate the idle UEs to release the RRC connections within a time period after establishment of the RRC connections respectively.

By broadcasting UE statistics request message(s) such as RRC paging message(s) to idle UEs located in the emergency area and intentionally triggering the idle UEs to establish RRC communication network operable to collect UE statistics is provided. The base station comprises a first interface adapted to communicate with a core network node, and a second interface adapted to communicate with UEs located in the base station. The base station further comprises a controlling unit adapted to receive from, the core network node via the first interface, at least one UE statistics request message, wherein the at least one UE statistics request message includes at least an RRC paging message, broadcast via the second interface the at least one UE statistics request message to all idle UEs located in the base station to trigger all the idle UEs to establish RRC connections with the base station, obtain the UE statistics of all the idle UEs located in the base station from the RRC connections, and transmit to, the core network node via the first interface, a UE statistics response message that includes UE statistics of all the idle UEs.

The at least one UE statistics request message may include specific RRC paging messages each of which is addressed to one specific idle UE to trigger the specific idle UE to establish RRC connections with the base station, and the controlling unit may be further adapted to broadcast the specific RRC paging messages. The at least one UE statistics request message may include a general RRC paging message which is not addressed to any specific idle UE but to all the idle UEs to trigger the idle UEs to establish RRC connections with the base station, and the controlling unit may be further adapted to broadcast the general RRC paging message. The specific RRC paging message or general RRC paging message may comprise an indicator to indicate the idle UEs to release the RRC connections within a time period after establishment of the RRC connections respectively.

By broadcasting UE statistics request message(s) such as RRC paging message(s) to idle UEs located in the emergency area and intentionally triggering the idle UEs to establish RRC connections, the statistics of the idle UEs and accordingly of all the UEs located in the emergency area may be accurately and efficiently collected.

The invention will be described in detail by reference to the following drawings, in which:
Fig. 1 illustrates a schematic view of a Long Term Evolution (LTE) network 100 including entities involved in the UE statistics collection;
Fig. 2 illustratively shows a signaling flow 200 of the UE statistics collection in a wireless communication network in accordance to an embodiment of the disclosure;
Fig. 3 illustratively shows a method 300 for a first core network node in a wireless communication network collecting UE statistics in a specific area in accordance with an embodiment of the disclosure;
Fig. 4 illustratively shows a method 400 for a base station in a wireless communication network collecting UE statistics in accordance with an embodiment of the disclosure;
Fig. 5 illustratively shows a method 500 for a UE in a wireless communication network in accordance with an embodiment of the disclosure; and
Fig. 6 illustratively shows a block diagram of a first core network node 610, a base station 620 and a UE 630 involved in the UE statistics collection in accordance with an embodiment of the disclosure.

### DETAILED DESCRIPTION

Embodiments of the present disclosure will be described more fully hereinafter with reference to the accompanying drawings, in which embodiments of the disclosure are shown. This invention may, however, be embodied in many different forms and should not be construed as limited to the embodiments set forth herein. Like numbers refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

The present disclosure is described below with reference to block diagrams and/or flowchart illustrations of methods, apparatus (systems) and/or computer program products according to embodiments of the disclosure. It is understood that blocks of the block diagrams and/or flowchart illustrations, and combinations of blocks in the block diagrams and/or flowchart illustrations, can be implemented by computer program instructions. These computer program instructions may be provided to a processor of a general purpose computer, special purpose computer, and/or other programmable data processing apparatus to produce a machine, such that the instructions, which execute via the processor of the computer and/or other programmable data processing apparatus, create means for implementing the functions/acts specified in the block diagrams and/or flowchart block or blocks.

Accordingly, the present disclosure may be embodied in hardware and/or in software (including firmware, resident software, micro-code, etc.). Furthermore, the present disclosure may take the form of a computer program product on a computer-usable or computer-readable storage medium having computer-usable or computer-readable program code embodied in the medium for use by or in connection with an instruction execution system. In the context of this document, a computer-usable or computer-readable medium may be any medium that can contain, store, communicate, propagate, or transport the program for use by or in connection with the instruction execution system, apparatus, or device.

Although the disclosure is described with reference to the LTE in the context, the skilled in the art should understand that the invention is not limited to this, but can indeed be applied to all existing and future wireless communication networks that support RRC connection establishment. Although specific terms are used here, such as UE and eNodeB, it should be understood that the invention is not limited to those specific terms but can be applied to all similar entities.

Embodiments of the disclosure will be described below with reference to the drawings.

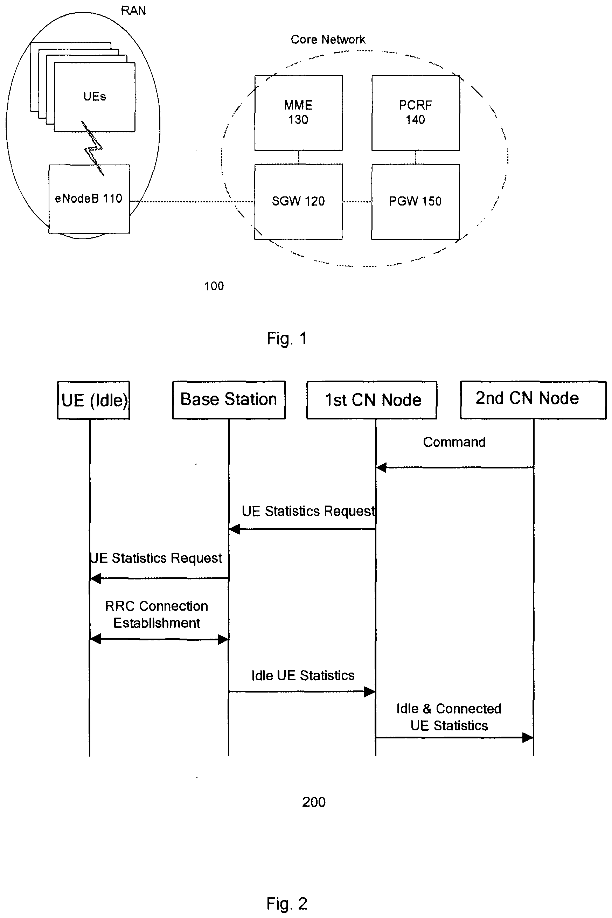

Fig. 1 illustrates a schematic view of a Long Term Evolution (LTE) network 100 including entities involved in the UE statistics collection.

The LTE network 100 includes a Radio Access Network (RAN, referred to as E-UTRAN in LTE) and a Core Network (CN, referred to as EPC in LTE). The eNodeB 110 is an element of the RAN which is capable to communicate with UEs located in its coverage. The Serving Gateway (SGW) 120, MME 130, PCRF 140, PDN Gateway (PGW) 150 are elements of the core network. The functions of these elements/ nodes are defined in 3GPP specifications and will not be discussed in detail.

Fig. 2 illustratively shows a signaling flow 200 of the UE statistics collection in accordance to an embodiment of the disclosure.

In case that an emergency happens in a specific area, one or more wireless communication network operator whose service covers the area may be requested by, e.g. municipal administration, to provide statistics of UEs located in the area to facilitate rescue. As shown in Fig. 2, a command requesting UE statistics of all the UEs located in base stations covering at least a part of the specific area is transmitted to a first core network node. The first core network node may be, e.g. a MME or a SGSN. The command may come from a second core network node such as a PCRF or a GMLC, or from an application functionality that is accessible to e.g. the operator or municipal administration. The command includes location information on the specific area. The information may be represented by coverage of at least one base station, hereinafter referred to as network element location information. Depending on the area impacted by the emergency, the specific area may covered by one or more base station. For example, in case that a building is on fire, only statistics of UEs located in the cell covered by one base station, even by one sector, is needed. In contrast, in case that an earthquake happens, the impacted area is much larger and could correspond to coverage of base stations managed by one MME, base stations managed by more MMEs or even the whole wireless communication network. Different granularity levels, such as Routing Area (RA), Tracking Area (TA), eNodeB or E-UTRAN Cell Global Identifier (ECGI), may be used in the command to indicate the scale of the interested area. Therefore it should be understood that the term "base station" as used herein may represent different level of RAN network elements, such as an eNodeB or a sector.

Generally, the location information on the specific area as received by the first core network is network element location information on the specific area which indicates the at least one base station. However it is possible that the location information from the second core network node or from an application functionality is not the network element location information, but geography location information represented by, e.g. latitude and longitude coordinates. In this case, the geography location information may be converted to the network element location information in advance by any core network element.

In response to receive the command, the first core network node, such as MME, transmits at least one UE statistics request message to the at least one base station to trigger the base station to obtain UE statistics of idle UEs for the base station. The UE statistics of connected UEs located in the at least one base station is available to the first core network node. It should be noted that there may be more than one core network node and more than one base station involved in the procedure, depending on the size of the specific area. For purpose of simplicity, Fig. 2 only shows the signalling between one first core network node and one base station.

The base station receives from the first core network node at least one UE statistics request message, and broadcasts information corresponding to the UE statistics request message to idle UEs located in the base station to trigger the idle UEs to establish RRC connections with the base station. The information broadcasted by the base station may or may not have the same format as that of the UE statistics request message. The idle UEs, when receiving the broadcasted at least one UE statistics request message, establish the RRC connections with the base station. The procedure of RRC connection establishment is defined in the 3GPP specifications and will not be discussed in detail. During the RRC connection establishment with the idle UEs, the base station may obtain various statistics of these UEs from the RRC connections. For example, the base station may calculate the number of the idle UEs by counting the number of newly established RRC connections. The base station then transmits to the first core network node a UE statistics response message that includes the obtained idle UE statistics. The first core network node receives from the base station the UE statistics response message that includes the idle UE statistics. In case there is more than base station involved, the first core network node receives from all the involved base stations the UE statistics response messages respectively. The first core network node obtains UE statistics of connected UEs located in the at least one base station, and transmits to, the second core network node or the application functionality, a report message including the UE statistics of the idle UEs and connected UEs located in the at least one base station. The UE statistics in the specific area is thus accurately and efficiently collected and can be used for rescue.

In addition to the number of UEs, the UE statistics may include UE location information which can be used to locate the user during rescue. Additionally, the UE type information, such as Machine Type Communication (MTC) or Machine to Machine (M2M), may be included in the UE statistics. Those MTC or M2M devices will not be counted in when calculating the total number of users. The various types of information may be combined in a table or a list and transmitted to the first core network node. The first core network may further process the UE statistics from the at least one base station (e.g. obtain a sum of the UE numbers located in different base stations) and report it to the second core network node or the application functionality.

The UE statistics request message may be any message that is capable of triggering the idle UEs receiving the message to establish RRC connections with the base station. To minimize the impact to the existing 3GPP standard, it is proposed to reuse the RRC paging message as defined in the 3GPP specification. Two exemplary embodiments will be discussed hereinafter.

In one embodiment, the at least one UE statistics request message may be the standard RRC paging messages. Each RRC paging message, hereinafter referred to as specific RRC paging message, is addressed to one specific idle UE. In this case the first core network node, such as the MME, may have a record for the idle UEs and knows which base station is serving a specific UE, but however may not ascertain whether or not the idle UEs are indeed located in coverage of the base station or of the MME, and can not obtain the accurate number of UEs, or the accurate location information of the UEs. The first core network node transmits to the at least one base station specific RRC paging messages and the at least one base station broadcasts the specific RRC paging messages over air interface. A specific idle UE monitors the specific RRC paging message on the paging occasions assigned to the UE. When the specific RRC paging message addressed to the specific idle UE is received, it establishes a RRC with the base station. In this embodiment, the standard RRC paging message does not need to be modified and the UE statistics collection procedure is transparent to the UE. The impact to the base station and the core network node is also minimized. However, a large number of RRC paging messages need to be transmitted and broadcasted, which will consume a considerable amount of signaling resources.

In another embodiment, the at least one UE statistics request message may be a newly defined RRC paging message, hereinafter referred to as general RRC paging message. The general RRC paging message is not addressed to any specific idle UE but to all idle UEs. The general RRC paging message may be derived by modifying the standard RRC paging message, e.g. by removing the specific idle UE address information contained in the standard RRC paging message or replacing it with a predefined value so that any idle UE that receives the message will recognize it. The first core network node transmits the same general RRC paging message to the at least one base station which in turn broadcasts the same general RRC paging message to the idle UEs. Each idle UE, when receiving the general RRC paging message, establishes a RRC with the base station. As compared with the preceding embodiment, the consumed signaling resources are greatly reduced which is especially important for the area where emergency has happened.

The RRC connections are intentionally established for purpose of UE statistics collection. To further reduce the resource consumption, the specific RRC paging message or general RRC paging message may comprise an indicator to indicate the idle UEs to release the RRC connections within a time period after establishment of the RRC connections respectively.

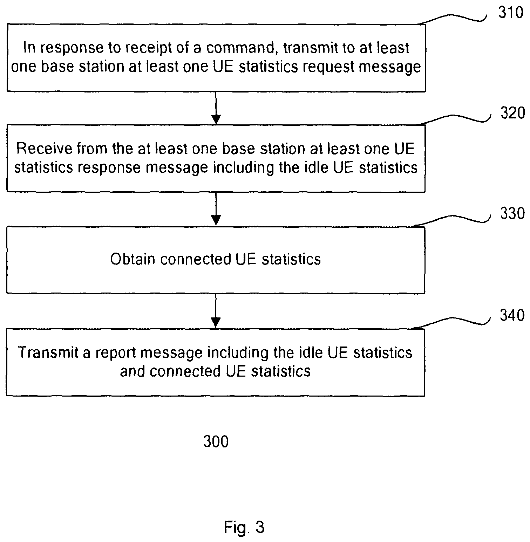

Fig. 3 illustratively shows a method 300 for a first core network node in a wireless communication network collecting UE statistics in a specific area in accordance with an embodiment of the disclosure.

At step 310, in response to receiving from a second core network node or an application functionality a command requesting UE statistics of idle UEs and connected UEs located in at least one base station covering at least a part of the specific area, the first core network node transmitting at least one UE statistics request message to the at least one base station to trigger the base station to obtain UE statistics of idle UEs for the base station. At step 320, the first core network node receives from the at least one base station, at least one UE statistics response message that includes the idle UE statistics. The first core network node obtains at step 330 UE statistics of connected UEs located in the at least one base station, and transmits at step 340 to, at least one of the second core network node or the application functionality, a report message including the UE statistics of the idle UEs and connected UEs located in the at least one base station.

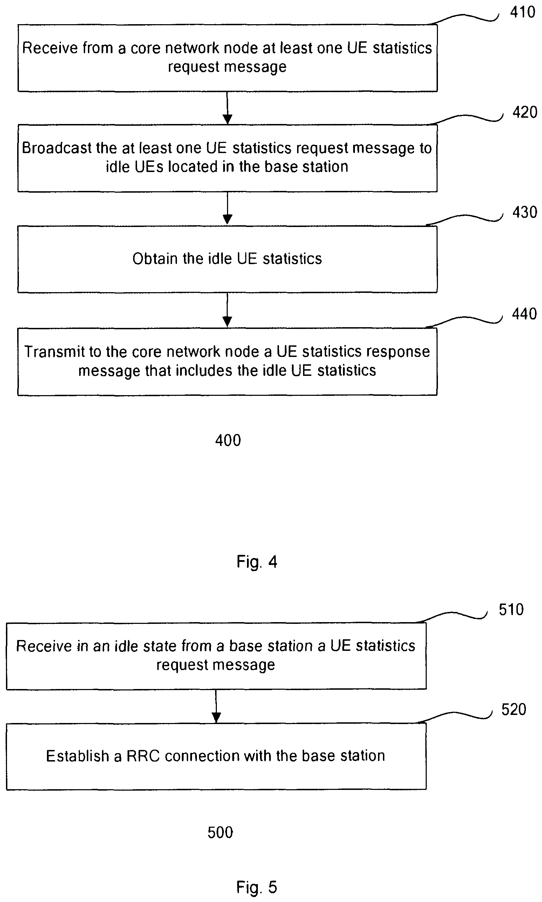

Fig. 4 illustratively shows a method 400 for a base station in a wireless communication network collecting UE statistics in accordance with an embodiment of the disclosure.

At step 410, the base station receives from a core network node at least one UE statistics request message. At step 420, it broadcasts information corresponding to the at least one UE statistics request message to idle UEs located in the base station to trigger the idle UEs to establish RRC connections with the base station. The broadcasting may include broadcasting the specific RRC paging messages or the general RRC paging message. The base station obtains at step 430 the UE statistics of the idle UEs located in the base station from the RRC connections, and transmits to the core network node a UE statistics response message that includes the idle UE statistics.

Fig. 5 illustratively shows a method 500 for a UE in a wireless communication network in accordance with an embodiment of the disclosure.

At step 410, the UE receives in an idle state from a base station a UE statistics request message. At step 420, in response to the UE statistics request message, the UE establishes a RRC connection with the base station.

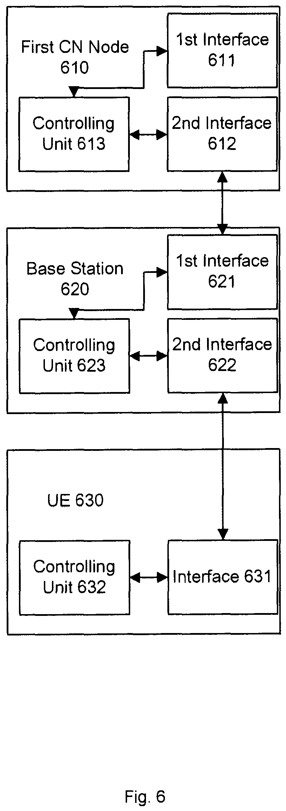

Fig. 6 illustratively shows a block diagram of a first core network node 610, a base station 620 and a UE 630 involved in the UE statistics collection in accordance with an embodiment of the disclosure.

The firs first core network node 610 comprises a first interface 611 adapted to communicate with a second core network node or an application functionality, a second interface 612 adapted to communicate with at least one base station 620 covering at least a part of the specific area, and a controlling unit 613. The controlling unit 613 is adapted to in response to receiving from a second core network node or an application functionality via the first interface 611 a command requesting UE statistics of idle UEs and connected UEs located in the at least one base station 620, transmit to, the at least one base station 620 via the second interface 612, at least one UE statistics request message to trigger the base station 620 to obtain UE statistics of idle UEs for the base station 620. The controlling unit 613 is further adapted to receive from, the at least one base station 620 via the second interface 612, at least one UE statistics response message that includes the idle UE statistics, obtain UE statistics of connected UEs located in the at least one base station 620, and transmit to, at least one of the second core network node or the application functionality via the first interface 611, a report message including the UE statistics of the idle UEs and connected UEs located in the at least one base station 620.

The base station 620 comprises a first interface 621 adapted to communicate with the core network node 610, and a second interface 622 adapted to communicate with UEs 620 located in the base station. The base station 620 further comprises a controlling unit 623 adapted to receive from, the core network node 610 via the first interface 621, at least one UE statistics request message, broadcast via the second interface 622 information corresponding to the at least one UE statistics request message to idle UEs located in the base station to trigger the idle UEs to establish RRC connections with the base station 620, obtain the UE statistics of the idle UEs located in the base station 620 from the RRC connections, and transmit to, the core network node 610 via the first interface 621, a UE statistics response message that includes the idle UE statistics. The controlling unit 623 may be further adapted to broadcast the specific RRC paging messages or the general RRC paging message.

The UE 630 comprises an interface 631 adapted to communicate with a base station 620 and a controlling unit 632. The controlling unit 632 is adapted to receive in an idle state from the base station 620 a UE statistics request message via the interface 631, and in response to the UE statistics request message, establish a RRC connection with the base station 620.

It should be noted that components in the core network node, base station and UE may be implemented by software or hardware or the combination thereof. For example, the controlling unit may comprise a processing unit, which may be provided on a single chip or a chip module and which may be any processor or computer device that performs operations based on program codes or instructions stored in a memory. Program codes are fetched from the memory and loaded into the processing unit in order to perform the steps described in connection with Figs. 3 to 5. The controlling unit may share the same processing unit or memory with the node, base station or UE, or use separate hardware.

While the exemplary embodiments of the present invention have been illustrated and described, it will be understood by those skilled in the art that various changes and modifications may be made, and equivalents may be substituted for elements thereof without departing from the true scope of the present invention, which is defined by the claims. In addition, many modifications may be made to adapt to a particular situation and the teaching of the present invention without departing from its central scope.

## Claims

1. A method for a first core network node (610) in a wireless communication network collecting User Equipment (630), UE, statistics of UEs located in an emergency area, the method comprising:
in response to receiving from a second core network node or an application functionality a command requesting UE statistics of all of idle UEs (630) and connected UEs (630) located in at least one base station (620) covering at least a part of the emergency area, transmitting (310) at least one UE statistics request message to the at least one base station (620) to trigger the base station (620) to obtain UE statistics of all idle UEs (630) for the base station (620) by broadcasting the at least one UE statistics request message, wherein the at least one UE statistics request message includes at least an RRC paging message;
receiving (320) from the at least one base station (620), at least one UE statistics response message that includes the UE statistics of all the idle UEs (630) in response to obtaining of UE statistics of all the idle UEs (630) from RRC connections that are set up in response to broadcasting the at least one UE statistics request message;
obtaining (330) UE statistics of all connected UEs (630) located in the at least one base station (620) directly; and
transmitting (340) to, at least one of the second core network node or the application functionality, a report message including the UE statistics of all of the idle UEs (630) and connected UEs (630) located in the at least one base station (620).

2. The method of claim 1, **characterised in that**, the statistics includes the number of UEs (630) or UE (630) location information.

3. The method of claim 1, **characterised in that**, the command includes network element location information on the emergency area which indicates the at least one base station (620).

4. The method of claim 1, **characterised in that**,
the at least one UE statistics request message includes specific Radio Resource Control, RRC, paging messages to be broadcasted by the at least one base station (620), wherein each of the specific RRC paging messages is addressed to one specific idle UE (630) to trigger the specific idle UE (630) to establish RRC connections with the base station (620); or
the at least one UE statistics request message includes a general RRC paging message to be broadcasted by the at least one base station (620), wherein the general RRC paging message is not addressed to any specific idle UE (630) but to all idle UEs (630) to trigger the idle UEs (630) to establish RRC connections with the corresponding base station (620).

5. The method of claim 4, **characterised in that**, the specific RRC paging message or general RRC paging message comprises an indicator to indicate the idle UEs (630) to release the RRC connections within a time period after establishment of the RRC connections respectively.

6. A method for a base station (620) covering at least part of an emergency area in a wireless communication network collecting User Equipment (630), UE, statistics of UEs located in the emergency area, the method comprising:
receiving from a core network node (610) at least one UE statistics request message, wherein the at least one UE statistics request message includes at least an RRC paging message;
broadcasting the at least one UE statistics request message to all idle UEs (630) located in the base station (620) to trigger all the idle UEs (630) to establish Radio Resource Control, RRC, connections with the base station (620);
obtaining the UE statistics of all the idle UEs (630) located in the base station (620) from the RRC connections; and
transmitting to the core network node (610) a UE statistics response message that includes the UE statistics of all the idle UEs.

7. The method of claim 6, **characterised in that**, the statistics includes the number of UEs (630) or UE (630) location information.

8. The method of claim 6, **characterised in that**,
the at least one UE statistics request message includes specific RRC paging messages each of which is addressed to one specific idle UE (630) to trigger the specific idle UE (630) to establish RRC connections with the base station (620), and the broadcasting comprises broadcasting the specific RRC paging messages; or
the at least one UE statistics request message includes a general RRC paging message which is not addressed to any specific idle UE (630) but to all the idle UEs (630) to trigger the idle UEs (630) to establish RRC connections with the base station (620), and the broadcasting comprises broadcasting the general RRC paging message.

9. The method of claim 8, **characterised in that**, the specific RRC paging message or general RRC paging message comprises an indicator to indicate the idle UEs (630) to release the RRC connections within a time period after establishment of the RRC connections respectively.

10. A first core network node (610) in a wireless communication network operable to collect User Equipment (630), UE, statistics of UEs located in an emergency area, the first core network node (610) comprising:
a first interface adapted to communicate with a second core network node or an application functionality;
a second interface adapted to communicate with at least one base station (620) covering at least a part of the emergency area; and
a controlling unit adapted to:
in response to receiving from the second core network node or the application functionality via the first interface a command requesting UE statistics of all of idle UEs (630) and connected UEs (630) located in the at least one base station (620), transmit to, the at least one base station (620) via the second interface, at least one UE statistics request message to trigger the base station (620) to obtain UE statistics of all idle UEs (630) for the base station (620) by broadcasting the at least one UE statistics request message, wherein the at least one UE statistics request message includes at least an RRC paging message,
receive from, the at least one base station (620) via the second interface, at least one statistics response message that includes the UE statistics of all the idle UEs (630) in response to obtaining of UE statistics of all the idle UEs (630) from RRC connections that are set up in response to broadcasting the at least one UE statistics request message,
obtain UE statistics of all connected UEs (630) located in the at least one base station (620) directly, and
transmit to, at least one of the second core network node or the application functionality via the first interface, a report message including the UE statistics of all of the idle UEs (630) and connected UEs (630) located in the at least one base station (620).

11. The first core network node (610) of claim 10, **characterised in that**, the statistics includes the number of UEs (630) or UE (630) location information.

12. The first core network node (610) of claim 10, **characterised in that**, the statistics includes UE (630) location information and UE (630) type information.

13. The first core network node (610) of claim 10, **characterised in that**, the command includes network element location information on the emergency area which indicates the at least one base station (620).

14. The first core network node (610) of claim 10, **characterised in that**,
the at least one UE statistics request message includes specific Radio Resource Control, RRC, paging messages to be broadcasted by the at least one base station (620), wherein each of the specific RRC paging messages is addressed to one specific idle UE (630) to trigger the specific idle UE (630) to establish RRC connections with the base station (620); or
the at least one UE statistics request message includes a general RRC paging message to be broadcasted by the at least one base station (620), wherein the general RRC paging message is not addressed to any specific idle UE (630) but to all the idle UEs (630) to trigger the idle UEs (630) to establish RRC connections with the corresponding base station (620).

15. The first core network node (610) of claim 14, **characterised in that**, the specific RRC paging message or general RRC paging message comprises an indicator to indicate the idle UEs (630) to release the RRC connections within a time period after establishment of the RRC connections respectively.

16. A base station (620) covering at least a part of an emergency area in a wireless communication network operable to collect User Equipment (630), UE, statistics of UEs located in the emergency area, the base station (620) comprising:
a first interface adapted to communicate with a core network node (610);
a second interface adapted to communicate with UEs (630) located in the base station (620); and
a controlling unit adapted to:
receive from, the core network node (610) via the first interface, at least one UE statistics request message, wherein the at least one UE statistics request message includes at least an RRC paging message,
broadcast via the second interface the at least one UE statistics request message to all idle UEs (630) located in the base station (620) to trigger all the idle UEs (630) to establish Radio Resource Control, RRC, connections with the base station (620),
obtain the UE statistics of all the idle UEs (630) located in the base station (620) from the RRC connections, and
transmit to, the core network node (610) via the first interface, a UE statistics response message that includes the UE statistics of all the idle UEs.

17. The base station (620) of claim 16, **characterised in that**, the statistics includes the number of UEs (630) or UE (630) location information.

18. The base station (620) of claim 16, **characterised in that**, the statistics includes UE (630) location information or UE (630) type information.

19. The base station (620) of claim 16, **characterised in that**,
the at least one UE statistics request message includes specific RRC paging messages each of which is addressed to one specific idle UE (630) to trigger the specific idle UE (630) to establish RRC connections with the base station (620), and the controlling unit is further adapted to broadcast the specific RRC paging messages; or
the at least one UE statistics request message includes a general RRC paging message which is not addressed to any specific idle UE (630) but to all the idle UEs (630) to trigger the idle UEs (630) to establish RRC connections with the base station (620), and the controlling unit is further adapted to broadcast the general RRC paging message.

20. The base station (620) of claim 19, **characterised in that**, the specific RRC paging message or general RRC paging message comprises an indicator to indicate the idle UEs (630) to release the RRC connections within a time period after establishment of the RRC connections respectively.

## Patentansprüche

1. Verfahren für einen ersten Kernnetzknoten (610) in einem drahtlosen Kommunikationsnetz, das Benutzereinrichtungsstatistik (630), UE-Statistik, von in einem Notfallbereich befindlichen UEs sammelt, wobei das Verfahren umfasst:
als Reaktion auf das Empfangen eines Befehls zur Anforderung von UE-Statistik von allen Leerlauf-UEs (630) und verbundenen UEs (630), die sich in mindestens einer Basisstation (620) befinden, welche mindestens einen Teil des Notfallbereichs abdeckt, von einem zweiten Kernnetzknoten oder einer Anwendungsfunktionalität, Übertragen (310) von mindestens einer UE-Statistik-Anforderungsnachricht an die mindestens eine Basisstation (620), um die Basisstation (620) aufzufordern, UE-Statistik von allen Leerlauf-UEs (630) für die Basisstation (620) zu erlangen, indem die mindestens eine UE-Statistik-Anforderungsnachricht rundgesendet wird, wobei die mindestens eine UE-Statistik-Anforderungsnachricht mindestens eine RRC-Funkrufnachricht einschließt;
Empfangen (320), von der mindestens einen Basisstation (620), mindestens einer UE-Statistik-Antwortnachricht, die die UE-Statistik aller Leerlauf-UEs (630) einschließt, als Reaktion auf das Erlangen von UE-Statistik aller Leerlauf-UEs (630) von RRC-Verbindungen, die als Reaktion auf das Rundsenden der mindestens einen UE-Statistik-Anforderungsnachricht eingerichtet werden;
Erlangen (330) von UE-Statistik von allen verbundenen UEs (630), die sich direkt in der mindestens einen Basisstation (620) befinden; und
Übertragen (340) einer Berichtnachricht einschließlich der UE-Statistik aller Leerlauf-UEs (630) und verbundenen UEs (630), die sich in der mindestens einen Basisstation (620) befinden, an mindestens eines von dem zweiten Kernnetzknoten oder der Anwendungsfunktionalität.

2. Verfahren nach Anspruch 1, **dadurch gekennzeichnet, dass** die Statistik die Anzahl von UEs (630) oder Standortinformationen der UE (630) einschließt.

3. Verfahren nach Anspruch 1, **dadurch gekennzeichnet, dass** der Befehl Netzelement-Standortinformationen zu dem Notfallbereich einschließt, die die mindestens eine Basisstation (620) angeben.

4. Verfahren nach Anspruch 1, **dadurch gekennzeichnet, dass** die mindestens eine UE-Statistik-Anforderungsnachricht spezifische Radio Resource Control-Funkrufnachrichten (RRC-Funkrufnachrichten) einschließt, die durch die mindestens eine Basisstation (620) rundzusenden sind, wobei jede der spezifischen RRC-Funkrufnachrichten an eine spezifische Leerlauf-UE (630) adressiert wird, um die spezifische Leerlauf-UE (630) aufzufordern, RRC-Verbindungen zu der Basisstation (620) aufzubauen; oder
die mindestens eine UE-Statistik-Anforderungsnachricht eine allgemeine RRC-Funkrufnachricht einschließt, die durch die mindestens eine Basisstation (620) rundzusenden ist, wobei die allgemeine RRC-Funkrufnachricht nicht an eine beliebige spezifische Leerlauf-UE (630) adressiert wird, sondern an alle Leerlauf-UEs (630), um die Leerlauf-UEs (630) aufzufordern, RRC-Verbindungen zu der entsprechenden Basisstation (620) aufzubauen.

5. Verfahren nach Anspruch 4, **dadurch gekennzeichnet, dass** die spezifische RRC-Funkrufnachricht oder allgemeine RRC-Funkrufnachricht einen Indikator umfasst, um den Leerlauf-UEs (630) anzugeben, die RRC-Verbindungen innerhalb einer Zeitperiode nach dem Aufbau der RRC-Verbindungen jeweils aufzuheben.

6. Verfahren für eine mindestens einen Teil eines Notfallbereichs in einem drahtlosen Kommunikationsnetz abdeckende Basisstation (620), das Benutzereinrichtungsstatistik (630), UE-Statistik, von UEs, die sich im Notfallbereich befinden, sammelt, wobei das Verfahren umfasst:
Empfangen mindestens einer UE-Statistik-Anforderungsnachricht von einem Kernnetzknoten (610), wobei die mindestens eine UE-Statistik-Anforderungsnachricht mindestens eine RRC-Funkrufnachricht einschließt;
Rundsenden der mindestens einen UE-Statistik-Anforderungsnachricht an alle in der Basisstation (620) befindlichen Leerlauf-UEs (630), um alle Leerlauf-UEs (630) aufzufordern, Radio Resource Control-Verbindungen (RRC-Verbindungen) zu der Basisstation (620) aufzubauen;
Erlangen der UE-Statistik aller in der Basisstation (620) befindlichen Leerlauf-UEs (630) von den RRC-Verbindungen; und
Übertragen einer UE-Statistik-Antwortnachricht, die die UE-Statistik aller Leerlauf-UEs einschließt, an den Kernnetzknoten (610).

7. Verfahren nach Anspruch 6, **dadurch gekennzeichnet, dass** die Statistik die Anzahl von UEs (630) oder Standortinformationen der UE (630) einschließt.

8. Verfahren nach Anspruch 6, **dadurch gekennzeichnet, dass** die mindestens eine UE-Statistik-Anforderungsnachricht spezifische RRC-Funkrufnachrichten einschließt, die jeweils an eine spezifische Leerlauf-UE (630) adressiert sind, um die spezifische Leerlauf-UE (630) aufzufordern, RRC-Verbindungen zu der Basisstation (620) aufzubauen, und wobei das Rundsenden das Rundsenden der spezifischen RRC-Funkrufnachrichten umfasst; oder
die mindestens eine UE-Statistik-Anforderungsnachricht eine allgemeine RRC-Funkrufnachricht einschließt, die nicht an eine beliebige spezifische Leerlauf-UE (630) adressiert ist, sondern an alle Leerlauf-UEs (630), um die Leerlauf-UEs (630) aufzufordern, RRC-Verbindungen zu der Basisstation (620) aufzubauen, und wobei das Rundsenden das Rundsenden der allgemeinen RRC-Funkrufnachricht umfasst.

9. Verfahren nach Anspruch 8, **dadurch gekennzeichnet, dass** die spezifische RRC-Funkrufnachricht oder allgemeine RRC-Funkrufnachricht einen Indikator umfasst, um den Leerlauf-UEs (630) anzugeben, die RRC-Verbindungen innerhalb einer Zeitperiode nach dem Aufbau der RRC-Verbindungen jeweils aufzuheben.

10. Erster Kernnetzknoten (610) in einem drahtlosen Kommunikationsnetz, der betreibbar ist, um Benutzereinrichtungsstatistik (630), UE-Statistik, von in einem Notfallbereich befindlichen UEs zu sammeln, wobei der erste Kernnetzknoten (610) umfasst:
eine erste Schnittstelle, die angepasst ist, um mit einem zweiten Kernnetzknoten oder einer Anwendungsfunktionalität zu kommunizieren;
eine zweite Schnittstelle, die angepasst ist, um mit mindestens einer Basisstation (620) zu kommunizieren, die mindestens einen Teil des Notfallbereichs abdeckt; und
eine Steuereinheit, die angepasst ist zum:
als Reaktion auf das Empfangen eines Befehls zur Anforderung von UE-Statistik von allen Leerlauf-UEs (630) und verbundenen UEs (630), die sich in der mindestens einen Basisstation (620) befinden, von dem zweiten Kernnetzknoten oder der Anwendungsfunktionalität über die erste Schnittstelle, Übertragen von mindestens einer UE-Statistik-Anforderungsnachricht an die mindestens eine Basisstation (620) über die zweite Schnittstelle, um die Basisstation (620) aufzufordern, UE-Statistik von allen Leerlauf-UEs (630) für die Basisstation (620) zu erlangen, indem die mindestens eine UE-Statistik-Anforderungsnachricht rundgesendet wird, wobei die mindestens eine UE-Statistik-Anforderungsnachricht mindestens eine RRC-Funkrufnachricht einschließt,
Empfangen, von der mindestens einen Basisstation (620) über die zweite Schnittstelle, mindestens einer Statistik-Antwortnachricht, die die UE-Statistik aller Leerlauf-UEs (630) einschließt, als Reaktion auf das Erlangen von UE-Statistik aller Leerlauf-UEs (630) von RRC-Verbindungen, die als Reaktion auf das Rundsenden der mindestens einen UE-Statistik-Anforderungsnachricht eingerichtet werden,
Erlangen von UE-Statistik von allen verbundenen UEs (630), die sich direkt in der mindestens einen Basisstation (620) befinden, und
Übertragen einer Berichtnachricht mit der UE-Statistik aller Leerlauf-UEs (630) und verbundenen UEs (630), die sich in der mindestens einen Basisstation (620) befinden, an mindestens eines von dem zweiten Kernnetzknoten oder der Anwendungsfunktionalität.

11. Erster Kernnetzknoten (610) nach Anspruch 10, **dadurch gekennzeichnet, dass** die Statistik die Anzahl von UEs (630) oder Standortinformationen von UE (630) einschließt.

12. Erster Kernnetzknoten (610) nach Anspruch 10, **dadurch gekennzeichnet, dass** die Statistik Standortinformationen von UE (630) oder Typinformationen von UE (630) einschließt.

13. Erster Kernnetzknoten (610) nach Anspruch 10, **dadurch gekennzeichnet, dass** der Befehl Netzelement-Standortinformationen zu dem Notfallbereich einschließt, die die mindestens eine Basisstation (620) angeben.

14. Erster Kernnetzknoten (610) nach Anspruch 10, **dadurch gekennzeichnet, dass**
die mindestens eine UE-Statistik-Anforderungsnachricht spezifische Radio Resource Control-Funkrufnachrichten (RRC-Funkrufnachrichten) einschließt, die durch die mindestens eine Basisstation (620) rundzusenden sind, wobei jede der spezifischen RRC-Funkrufnachrichten an eine spezifische Leerlauf-UE (630) adressiert wird, um die spezifische Leerlauf-UE (630) aufzufordern, RRC-Verbindungen zu der Basisstation (620) aufzubauen; oder
die mindestens eine UE-Statistik-Anforderungsnachricht eine allgemeine RRC-Funkrufnachricht einschließt, die durch die mindestens eine Basisstation (620) rundzusenden ist, wobei die allgemeine RRC-Funkrufnachricht nicht an eine beliebige spezifische Leerlauf-UE (630) adressiert wird, sondern an alle Leerlauf-UEs (630), um die Leerlauf-UEs (630) aufzufordern, RRC-Verbindungen zu der entsprechenden Basisstation (620) aufzubauen.

15. Erster Kernnetzknoten (610) nach Anspruch 14, **dadurch gekennzeichnet, dass** die spezifische RRC-Funkrufnachricht oder allgemeine RRC-Funkrufnachricht einen Indikator umfasst, um den Leerlauf-UEs (630) anzugeben, die RRC-Verbindungen innerhalb einer Zeitperiode nach dem Aufbau der RRC-Verbindungen jeweils aufzuheben.

16. Basisstation (620), die mindestens einen Teil eines Notfallbereichs in einem drahtlosen Kommunikationsnetz abdeckt und betriebsfähig ist, um Benutzereinrichtungsstatistik (630), UE-Statistik, von in dem Notfallbereich befindlichen UEs zu sammeln, wobei die Basisstation (620) umfasst:
eine erste Schnittstelle, die angepasst ist, um mit einem Kernnetzknoten (610) zu kommunizieren;
eine zweite Schnittstelle, die angepasst ist, um mit UEs (630) in der Basisstation (620) zu kommunizieren; und
eine Steuereinheit, die angepasst ist zum:
Empfangen mindestens einer UE-Statistik-Anforderungsnachricht von dem Kernnetzknoten (610) über die erste Schnittstelle, wobei die mindestens eine UE-Statistik-Anforderungsnachricht mindestens eine RRC-Funkrufnachricht einschließt,
Rundsenden der mindestens einen UE-Statistik-Anforderungsnachricht über die zweite Schnittstelle an alle in der Basisstation (620) befindlichen Leerlauf-UEs (630), um alle Leerlauf-UEs (630) aufzufordern, Radio Resource Control-Verbindungen (RRC-Verbindungen) zu der Basisstation (620) aufzubauen,
Erlangen der UE-Statistik aller in der Basisstation (620) befindlichen Leerlauf-UEs (630) von den RRC-Verbindungen, und
Übertragen einer UE-Statistik-Antwortnachricht, die die UE-Statistik aller Leerlauf-UEs einschließt, an den Kernnetzknoten (610) über die erste Schnittstelle.

17. Basisstation (620) nach Anspruch 16, **dadurch gekennzeichnet, dass** die Statistik die Anzahl von UEs (630) oder Standortinformationen der UE (630) einschließt.

18. Basisstation (620) nach Anspruch 16, **dadurch gekennzeichnet, dass** die Statistik Standortinformationen der UE (630) oder Typinformationen der UE (630) einschließt.

19. Basisstation (620) nach Anspruch 16, **dadurch gekennzeichnet, dass**
die mindestens eine UE-Statistik-Anforderungsnachricht spezifische RRC-Funkrufnachrichten einschließt, die jeweils an eine spezifische Leerlauf-UE (630) adressiert sind, um die spezifische Leerlauf-UE (630) aufzufordern, RRC-Verbindungen zu der Basisstation (620) aufzubauen, und wobei die Steuereinheit ferner angepasst ist, um die spezifischen RRC-Funkrufnachrichten rundzusenden; oder
die mindestens eine UE-Statistik-Anforderungsnachricht eine allgemeine RRC-Funkrufnachricht einschließt, die nicht an eine beliebige spezifische Leerlauf-UE (630) adressiert ist, sondern an alle Leerlauf-UEs (630), um die Leerlauf-UEs (630) aufzufordern, RRC-Verbindungen zu der Basisstation (620) aufzubauen, und wobei die Steuereinheit ferner angepasst ist, um die allgemeine RRC-Funkrufnachricht rundzusenden.

20. Basisstation (620) nach Anspruch 19, **dadurch gekennzeichnet, dass** die spezifische RRC-Funkrufnachricht oder allgemeine RRC-Funkrufnachricht einen Indikator umfasst, um den Leerlauf-UEs (630) anzugeben, die RRC-Verbindungen innerhalb einer Zeitperiode nach dem Aufbau der RRC-Verbindungen jeweils aufzuheben.

## Revendications

1. Procédé permettant à un premier noeud de réseau central (610) dans un réseau de communication sans fil de collecter des statistiques d'équipement utilisateur (630), UE, d'UE situés dans une zone d'urgence, le procédé comprenant :
en réponse à la réception, depuis un deuxième noeud de réseau central ou une fonctionnalité d'application, d'une commande demandant des statistiques d'UE de tous les UE inactifs (630) et UE connectés (630) situés dans au moins une station de base (620) couvrant au moins une partie de la zone d'urgence, la transmission (310) d'au moins un message de demande de statistiques d'UE à l'au moins une station de base (620) pour amener la station de base (620) à obtenir des statistiques d'UE de tous les UE inactifs (630) pour la station de base (620) par diffusion de l'au moins un message de demande de statistiques d'UE, dans lequel l'au moins un message de demande de statistiques d'UE inclut au moins message de radiomessagerie RRC ;
la réception (320) depuis l'au moins une station de base (620), d'au moins un message de réponse de statistiques d'UE qui inclut les statistiques d'UE de tous les UE inactifs (630) en réponse à l'obtention de statistiques d'UE de tous les UE inactifs (630) à partir de connexions RRC qui sont établies en réponse à la diffusion de l'au moins un message de demande de statistiques d'UE ;
l'obtention (330) de statistiques d'UE de tous les UE connectés (630) situés dans l'au moins une station de base (620) directement ; et
la transmission (340) à au moins l'un parmi le deuxième noeud de réseau central ou la fonctionnalité d'application, d'un message de rapport incluant les statistiques d'UE de la totalité des UE inactifs (630) et des UE connectés (630) situés dans l'au moins une station de base (620).

2. Procédé selon la revendication 1, **caractérisé en ce que,** les statistiques incluent le nombre d'UE (630) ou des informations de localisation d'UE (630).

3. Procédé selon la revendication 1, **caractérisé en ce que,** la commande inclut des informations de localisation d'élément de réseau sur la zone d'urgence qui indiquent l'au moins une station de base (620).

4. Procédé selon la revendication 1, **caractérisé en ce que,** l'au moins un message de demande de statistiques d'UE inclut un message de radiomessagerie de commande de ressource radio, RRC, spécifique à diffuser par l'au moins une station de base (620), dans lequel chacun des messages de radiomessagerie RRC spécifiques est adressé à un EU inactif spécifique (630) pour amener l'EU inactif spécifique (630) à établir des connexions RRC avec la station de base (620) ; ou l'au moins un message de demande de statistiques d'UE inclut un message de radiomessagerie RRC général à
diffuser par l'au moins une station de base (620), dans lequel le message de radiomessagerie RRC général n'est pas adressé à l'un quelconque EU inactif spécifique (630) mais à tous les UE inactifs (630) pour amener les UE inactifs (630) à établir des connexions RRC avec la station de base correspondante (620).

5. Procédé selon la revendication 4, **caractérisé en ce que,** le message de radiomessagerie RRC spécifique ou le message de radiomessagerie RRC général comprend un indicateur pour indiquer aux UE inactifs (630) de libérer les connexions RRC dans les limites d'une période de temps après établissement des connexions RRC respectivement.

6. Procédé pour une station de base (620) couvrant au moins une partie d'une zone d'urgence dans un réseau de communication sans fil collectant des statistiques d'équipement utilisateur (630), UE, d'UE situés dans la zone d'urgence, le procédé comprenant :
la réception depuis un noeud de réseau central (610) d'au moins un message de demande de statistiques d'UE, dans lequel l'au moins un message de demande de statistiques d'UE inclut au moins message de radiomessagerie RRC ;
la diffusion de l'au moins un message de demande de statistiques d'UE à tous les UE inactifs (630) situés dans la station de base (620) pour amener tous les UE inactifs (630) à établir des connexions de commande de ressource radio, RRC, avec la station de base (620) ;
l'obtention des statistiques d'UE de tous les UE inactifs (630) situés dans la station de base (620) à partir des connexions RRC ; et
la transmission au noeud de réseau central (610) via la première interface, d'un message de réponse de statistiques d'UE qui inclut les statistiques d'UE de tous les UE inactifs.

7. Procédé selon la revendication 6, **caractérisé en ce que,** les statistiques incluent le nombre d'UE (630) ou des informations de localisation d'UE (630).

8. Procédé selon la revendication 6, **caractérisé en ce que,** l'au moins un message de demande de statistiques d'UE inclut des messages de radiomessagerie RRC spécifiques dont chacun est adressé à un EU inactif spécifique (630) pour amener l'EU inactif spécifique (630) à établir des connexions RRC avec la station de base (620), et la diffusion comprend la diffusion des messages de radiomessagerie RRC spécifiques ; ou
l'au moins un message de demande de statistiques d'UE inclut un message de radiomessagerie RRC général qui n'est pas adressé à l'un quelconque EU inactif spécifique (630) mais à tous les UE inactifs (630) pour amener les UE inactifs (630) à établir des connexions RRC avec la station de base (620), et la diffusion comprend la diffusion du message de radiomessagerie RRC général.

9. Procédé selon la revendication 8, **caractérisé en ce que,** le message de radiomessagerie RRC spécifique ou le message de radiomessagerie RRC général comprend un indicateur pour indiquer aux UE inactifs (630) de libérer les connexions RRC dans les limites d'une période de temps après établissement des connexions RRC respectivement.

10. Premier noeud de réseau central (610) dans un réseau de communication sans fil opérationnel pour collecter des statistiques d'équipement utilisateur (630), UE, d'UE situés dans une zone d'urgence, le premier noeud de réseau central (610) comprenant :
une première interface conçue pour communiquer avec un deuxième noeud de réseau central ou une fonctionnalité d'application ;
une deuxième interface conçue pour communiquer avec au moins une station de base (620) couvrant au moins une partie de la zone d'urgence ; et
une unité de commande conçue pour :
en réponse à la réception depuis le deuxième noeud de réseau central ou la fonctionnalité d'application via la première interface d'une commande demandant des statistiques d'UE de la totalité des UE inactifs (630) et des UE connectés (630) situés dans l'au moins une station de base (620), transmettre, à l'au moins une station de base (620) via la deuxième interface, au moins un message de demande de statistiques d'UE pour amener la station de base (620) à obtenir des statistiques d'UE de tous les UE inactifs (630) pour la station de base (620) par diffusion de l'au moins un message de demande de statistiques d'UE, dans lequel l'au moins un message de demande de statistiques d'UE inclut au moins message de radiomessagerie RRC,
recevoir, depuis l'au moins une station de base (620) via la deuxième interface, au moins un message de réponse de statistiques qui inclut les statistiques d'UE de tous les UE inactifs (630) en réponse à l'obtention de statistiques d'UE de tous les UE inactifs (630) à partir de connexions RRC qui sont établies en réponse à la diffusion de l'au moins un message de demande de statistiques d'UE,
obtenir des statistiques d'UE de tous les UE connectés (630) situés dans l'au moins une station de base (620) directement, et
transmettre, à au moins l'un parmi le deuxième noeud de réseau central ou la fonctionnalité d'application via la première interface, un message de rapport incluant les statistiques d'UE de la totalité des UE inactifs (630) et des UE connectés (630) situés dans l'au moins une station de base (620).

11. Premier noeud de réseau central (610) selon la revendication 10, **caractérisé en ce que,** les statistiques incluent le nombre d'UE (630) ou des informations de localisation d'UE (630).

12. Premier noeud de réseau central (610) selon la revendication 10, **caractérisé en ce que,** les statistiques incluent des informations de localisation d'UE (630) et des informations de type d'UE (630).

13. Premier noeud de réseau central (610) selon la revendication 10, **caractérisé en ce que,** la commande inclut des informations de localisation d'élément de réseau sur la zone d'urgence qui indiquent l'au moins une station de base (620).

14. Premier noeud de réseau central (610) selon la revendication 10, **caractérisé en ce que,**
l'au moins un message de demande de statistiques d'UE inclut un message de radiomessagerie de commande de ressource radio, RRC, spécifique à diffuser par l'au moins une station de base (620), dans lequel chacun des messages de radiomessagerie RRC spécifiques est adressé à un EU inactif spécifique (630) pour amener l'EU inactif spécifique (630) à établir des connexions RRC avec la station de base (620) ; ou l'au moins un message de demande de statistiques d'UE inclut un message de radiomessagerie RRC général à diffuser par l'au moins une station de base (620), dans lequel le message de radiomessagerie RRC général n'est pas adressé à l'un quelconque EU inactif spécifique (630) mais à tous les UE inactifs (630) pour amener les UE inactifs (630) à établir des connexions RRC avec la station de base correspondante (620).

15. Premier noeud de réseau central (610) selon la revendication 14, **caractérisé en ce que,** le message de radiomessagerie RRC spécifique ou le message de radiomessagerie RRC général comprend un indicateur pour indiquer aux UE inactifs (630) de libérer les connexions RRC dans les limites d'une période de temps après établissement des connexions RRC respectivement.

16. Station de base (620) couvrant au moins une partie d'une zone d'urgence dans un réseau de communication sans fil opérationnel pour collecter des statistiques d'équipement utilisateur (630), UE, d'UE situés dans la zone d'urgence, la station de base (620) comprenant :
une première interface conçue pour communiquer avec un noeud de réseau central (610) ;
une deuxième interface conçue pour communiquer avec des UE (630) situés dans la station de base (620) ; et
une unité de commande conçue pour :
recevoir, du noeud de réseau central (610) via la première interface, au moins un message de demande de statistiques d'UE, dans laquelle l'au moins un message de demande de statistiques d'UE inclut au moins message de radiomessagerie RRC,
diffuser via la deuxième interface l'au moins un message de demande de statistiques d'UE à tous les UE inactifs (630) situés dans la station de base (620) pour amener tous les UE inactifs (630) à établir des connexions de commande de ressource radio, RRC, avec la station de base (620),
obtenir les statistiques d'UE de tous les UE inactifs (630) situés dans la station de base (620) à partir des connexions RRC, et
transmettre, au noeud de réseau central (610) via la première interface, un message de réponse de statistiques d'UE qui inclut les statistiques d'UE de tous les UE inactifs.

17. Station de base (620) selon la revendication 16, **caractérisée en ce que,** les statistiques incluent le nombre d'UE (630) ou des informations de localisation d'UE (630).

18. Station de base (620) selon la revendication 16, **caractérisée en ce que,** les statistiques incluent des informations de localisation d'UE (630) ou des informations de type d'UE (630).

19. Station de base (620) selon la revendication 16, **caractérisée en ce que,**
l'au moins un message de demande de statistiques d'UE inclut des messages de radiomessagerie RRC spécifiques dont chacun est adressé à un EU inactif spécifique (630) pour amener l'EU inactif spécifique (630) à établir des connexions RRC avec la station de base (620), et l'unité de commande est en outre conçue pour diffuser les messages de radiomessagerie RRC spécifiques ; ou
l'au moins un message de demande de statistiques d'UE inclut un message de radiomessagerie RRC général qui n'est pas adressé à l'un quelconque EU inactif spécifique (630) mais à tous les UE inactifs (630) pour amener les UE inactifs (630) à établir des connexions RRC avec la station de base (620), et l'unité de commande est en outre conçue pour diffuser le message de radiomessagerie RRC général.

20. Station de base (620) selon la revendication 19, **caractérisée en ce que,** le message de radiomessagerie RRC spécifique ou le message de radiomessagerie RRC général comprend un indicateur pour indiquer aux UE inactifs (630) de libérer les connexions RRC dans les limites d'une période de temps après établissement des connexions RRC respectivement.
